# EUROPÄISCHE PATENTSCHRIFT

(11) **EP 1 566 029 B1**
(45) Veröffentlichungstag und Bekanntmachung des Hinweises auf die Patenterteilung: **03.10.2007**
(21) Anmeldenummer: 03788797.3
(22) Anmeldetag: 20.11.2003
(51) Int. Cl.: H04L 12/66

(54) **GATEWAY-EINHEIT ZUR VERBINDUNG VON SUBNETZEN IN FAHRZEUGEN**
GATEWAY UNIT FOR CONNECTING SUB-NETWORKS, IN PARTICULAR IN VEHICLES
UNITE DE PASSERELLE PERMETTANT DE CONNECTER DES SOUS-RESEAUX, NOTAMMENT DANS DES VEHICULES

(30) Priorität: 20.11.2002 DE 10254285
(43) Veröffentlichungstag der Anmeldung: 24.08.2005
(73) Patentinhaber: ROBERT BOSCH GMBH, 70442 Stuttgart (DE)
(72) Erfinder: EIMERS-KLOSE, Doerte, 72762 Reutlingen (DE); HEINISCH, Cornelia, 73734 Esslingen (DE); FISCHER, Joerg, 31139 Hildesheim (DE); GRAMANN, Timo, 79787 Lauchringen (DE)
(86) Internationale Anmeldenummer: PCT/DE2003/003848
(87) Internationale Veröffentlichungsnummer: WO 2004/047385

(56) Entgegenhaltungen:
- EP-A- 1 361 713
- DE-A- 10 044 818
- US-A1- 2002 141 438
- AMIRFAIZ F E: "DESIGN AND IMPLEMENTATION OF A GENERIC GATEWAY" PROCEEDINGS OF THE COMPUTER NETWORKING SYMPOSIUM. WASHINGTON, NOV. 17 - 18, 1986, WASHINGTON, IEEE COMP. SOC. PRESS, US, November 1986 (1986-11), Seiten 205-213, XP000812879

## Beschreibung

### Stand der Technik

Die Erfindung betrifft eine Gateway-Einheit zur Verbindung von Subnetzen, insbesondere in Fahrzeugen.

Um neue Dienste im Fahrzeug zu ermöglichen ist eine Kommunikation der Steuereinheiten, die sich in unterschiedlichen Bussegmenten befinden, zwingend erforderlich. Eine solche Kommunikation kann nur stattfinden, wenn die unterschiedlichen Bussegmente über eine Gateway-Einheit bzw. Gateway-Einheiten miteinander verbunden sind. Eine Gateway-Einheit, die zwei Bussegmente miteinander verbindet, hat dabei die Aufgabe, Nachrichten, die auf einem Bussegment empfangen werden, auf ein anderes Bussegment weiterzuleiten (Routing). Die Komplexität einer solchen Gateway-Einheit steigt mit der Anzahl der zu koppelnden Bussegmente. Bei der Auslegung der Netzkoppelarchitektur eines Fahrzeugs wird versucht, ein Optimum für die Eigenschaften der tolerierbaren Verzögerung für das Nachrichten-Routing, der Fehlertoleranz, der Flexibilität, der Erweiterbarkeit und der Kosten zu finden. Je nach Anwendung werden zentrale Gateway-Einheiten mit einer Sternarchitektur oder mehrere Gateway-Einheiten, die z.B. mit einem Backbone-Bus verbunden sein können, eingesetzt. Die Gateway-Einheiten, über die unterschiedliche Busse gekoppelt sind, sind konfiguriert (z.B. über Tabellen). Das heißt für das reine Nachrichten-Routing auf ein anderes Segment ist somit keine Abänderung der Software erforderlich. Sobald sich aber die Art und die Anzahl der gekoppelten Bussegmente ändern, ist ein erheblicher Änderungsaufwand erforderlich, bei dem nicht nur die bestehenden Konfigurationstabellen angepasst werden müssen, sondern die komplette Software umgeschrieben werden muss, um den neuen Anforderungen gerecht zu werden. Die Komplexität der zentralen Konfiguration und der Routing-Software steigt also mit der Anzahl der gekoppelten Bussegmente enorm an.

Die DE 100 44 818 A1 beschreibt ein Gateway, welches zwei Interface-Anschlüsse aufweist, an die zwei unterschiedliche Busse gekoppelt sind. Dieses Gateway hat dabei die Aufgabe, Nachrichten auf dem einen Bussystem in das Protokoll des anderen Bussystems zu übersetzen. Lösungen bei einer Änderung der angekoppelten Bussysteme werden nicht aufgezeigt.

Die US 2002/0 141 438 A1 zeigt ein Gateway, welches einen Prozessor umfasst, der in der Lage ist, Daten zwischen zwei Einheiten auszustauschen nach verschiedenen Kommunikationsprotokollen.

### Vorteile der Erfindung

Durch den modularen Aufbau einer Gateway-Einheit, bei welcher ein in Software ausgebildetes Gateway (modulares Software-Gateway) für das Routing von Nachrichten zwischen genau zwei Subnetzen zuständig ist, wird es ermöglicht, Gateways zu erweitern, ohne dass eine Änderung in der vorhandenen Software des Gateways und/oder in den vorhandenen Konfigurationstabellen erforderlich ist. Durch das Hinzufügen oder Weglassen eines solchen modularen Software-Gateways bei Änderung der Netztopologie werden solche Änderungsmaßnahmen vermieden. Entsprechend ist es möglich, bei einer zentralen Gateway-Einheit ein Bussegment zu entfernen ohne bestehende Kopplungspfade zu beeinflussen.

Ferner wird durch die oben genannten modularen Software-Gateways eine Fehlerbegrenzung erreicht, da bei nicht funktionsfähigem modularen Software-Gateway die anderen modularen Software-Gateways unabhängig davon weiterhin ihre Aufgabe erfüllen. Ein Fehler wird also auf das unmittelbar betroffene modulare Sotfware-Gateway begrenzt, die Kopplung zu anderen Bussegmenten ist nicht berührt. Kommt es auf einem Bussegment zu einem Fehler, so werden die Nachrichten über die anderen Bussegmente ohne Einschränkung weiter geroutet.

Ferner ist das oben skizzierte Konzept flexibel erweiterbar und passt sich der Netzkoppelarchitektur an. Wird ein zusätzliches Subnetz einem zentralen Gateway hinzugefügt, so müssen lediglich die zusätzlichen modularen Software-Gateways hinzugefügt werden. Die bestehenden modularen Software-Gateways sind davon nicht betroffen. Wird ein Subnetz entfernt, werden die Gateways, die auf dieses Subnetz koppeln, entfernt, die restlichen bleiben unverändert bestehen.

Da ferner in einem modularen Software-Gateway immer nur die Funktion enthalten ist, die für das Koppeln der zwei unterschiedlichen Subnetze erforderlich ist, wird eine Nachricht schnellst möglich geroutet. Unnötiger Overhead für das Routing einer Nachricht wird so vermieden. Da ein modulares Software-Gateway genau für die Kopplung von zwei Subnetzen zuständig ist, kann ferner der Informationsfluss gesondert kontrolliert werden, wenn der Datentransfer zwischen einem Subnetz mit sicherheitskritischen Funktionen und einem Subnetz mit nicht sicherheitskritischen Funktionen stattfindet. Es wird somit also eine optimale Kontrollmöglichkeit für eine Firewall-Funktionalität bereitgestellt. Diese kann jeden Kopplungspfad individuell kontrollieren. So kann ein modulares Software-Gateway, das Nachrichten über eine Luftschnittstelle routet, zur Abwehr von externen Bedrohungen striktere Sicherheitsmechanismen implementieren als ein modulares Software-Gateway, das Nachrichten zwischen zwei CAN-Subnetzen im Fahrzeug-routet und direkt keiner externen Bedrohung ausgesetzt ist.

Ferner ermöglicht die dargestellte Architektur ein individuelles Aktiv- und/oder Inaktivschalten eines einzelnen oder mehrerer modularer Software-Gateways, so dass auf dies Weise abhängig von Systemzuständen ein oder mehrere modulare Software-Gateways ein- bzw. ausgeschaltet werden können.

Ferner erfolgt eine Reduzierung der Komplexität der gesamten Gateway-Einheit, da die einzelnen modulare Software-Gateways untereinander überhaupt nicht miteinander verknüpft sind. Es spielt keine Rolle, ob z.B. drei modulare Software-Gateways auf einem zentralen Gateway oder auf drei getrennten Punkt-zu-Punkt-Gateways ablaufen.

Weitere Vorteile ergeben sich aus einer konkreten Ausgestaltung der modulare Software-Gateways, nach der in jedem modularen Software-Gateway Routingtabellen vorgesehen sind, über die das Routing der Nachrichten abgewickelt wird und die unabhängig von der Software des Gateways sind. Durch diesen tabellenbasierten Ansatz wird es ermöglicht, ein Tool zur Konfiguration der Gateway-Software einzusetzen. Dieser Ansatz führt auch in vorteilhafter Weise zu einer Priorisierungsmöglichkeit der Nachrichten, so dass bestimmte Nachrichten, die bevorzugt geroutet werden sollen, eine höhere Priorität zugeordnet werden kann als anderen Nachrichten.

Ferner ist in vorteilhafter Weise ein Scheduler vorgesehen, der trotz der Aufteilung in mehrere modulare Software-Gateways gewährleistet, dass die Reihenfolge des Nachrichten-Routings eingehalten wird. Auf diese Weise kann eine Nachricht, die zuerst in modularen Software-Gateway angekommen ist, das modulare Software-Gateway auch zuerst wieder verlassen.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsbeispielen näher erläutert.
Figur 1 zeigt das Grundprinzip der beschriebenen Architektur einer Gateway-Einheit, welche drei Bussegmente miteinander verbindet.
Figur 2 zeigt ein bevorzugtes Ausführungsbeispiel eines solchen Gateways, welches Nachrichten zwischen einem Lowspeed-CAN, einem Highspeed-CAN und einem SPI-Bus vermittelt.
Figur 3 zeigt eine zentrale Gateway-Einheit zur Kopplung zwischen vier Subnetzen.

### Beschreibung von Ausführungsbeispielen

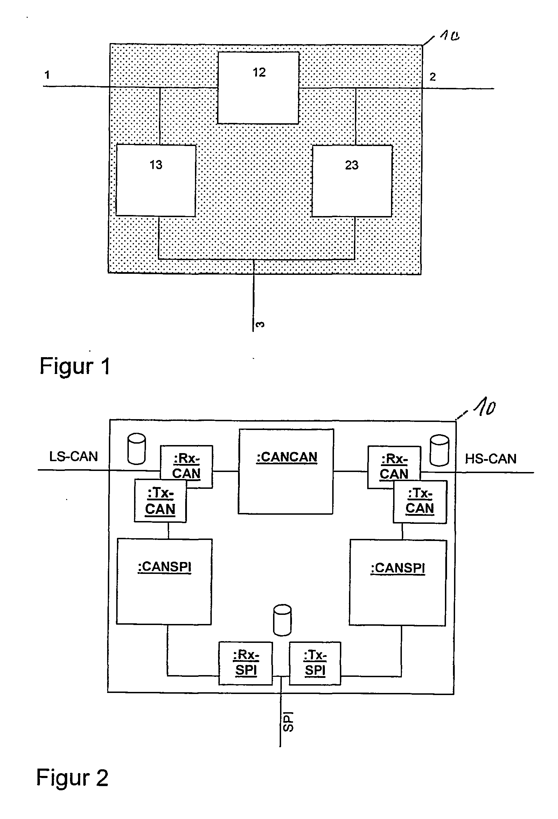

In Figur 1 ist eine Gateway-Einheit 10 dargestellt, an die drei Bussegmente 1, 2, 3 angekoppelt sind und die die Aufgabe hat, Nachrichten von einem Bussegment auf eines der anderen oder beide andere Bussegmente zu verbinden (routen). Grundprinzip der dargestellten Architektur sind die modularen Software-Gateways 12, 13, 23, wobei ein solches Gateway für das Routing von Nachrichten zwischen genau zwei Subnetzen zuständig ist. Somit routet das Gateway 12 Nachrichten von 1 nach 2 und umgekehrt, das Gateway 13 Nachrichten von 1 nach 3 und umgekehrt, das Gateway 23 Nachrichten von 2 nach 3 und umgekehrt. Jedes modulare Software-Gateway beschreibt daher einen individuellen Koppelpfad zwischen zwei Subnetzen bzw. Bussegmenten. Die Gateways 12, 13, 23 sind dabei als Software-Programme ausgestaltet, mit deren Hilfe die protokollspezifischen Anpassungen vorgenommen werden, die für ein Nachrichten-Routing zwischen den beiden Subnetzen erforderlich sind. Je nach Ausführungsbeispiel handelt es sich bei jedem Subnetz um ein individuelles Übertragungsmedium. Subnetz 1 kann z.B. ein Lowspeed-CAN, Subnetz 2 ein Highspeed-CAN und Subnetz 3 ein SPI-Bus sein. Kommt ein neues Subnetz hinzu, beispielsweise ein MOST-Bus, so werden zusätzliche modulare Software-Gateways integriert. Die Bestehenden müssen nicht geändert werden. Wird ein Subnetz entfernt, beispielsweise der SPI-Bus, so werden die modularen Software-Gateways 13 und 23 entfernt. Um eine universelle Gateway-Funktion zu haben, sind modulare Software-Gateways für alle Kopplungsmöglichkeiten zu schreiben. Diese werden dann je nach Auslegung des zu realisierenden Gateways zum Gesamtsystem kombiniert. Im Regelfall wird es so sein, dass nicht alle Subnetze direkt miteinander gekoppelt sind, so dass nur ausgewählte Kopplungspfade mit ausgewählten modulare Software-Gateways zu versehen sind. Soll jedes Subnetz mit jedem anderen gekoppelt werden, so benötigt man N*(N-1)/2 modulare Software-Gateways. Die Variable N entspricht dabei der Anzahl der im Gesamtsystem vorhandenen Subnetze. Für drei Subnetze ergeben sich damit 3 modulare Software-Gateways, für vier Subnetze 6 und für fünf Subnetze 10. Ob sich diese modulare Software-Gateways in einem zentralen Gateway befinden oder in mehreren verteilten Punkt-zu-Punkt-Gateways spielt eine untergeordnete Rolle.

Figur 2 zeigt ein detaillierteres Ausführungsbeispiel der Grundzüge der modularen Gateway-Architektur gemäß Figur 1. Das Gateway 10, welches vorzugsweise als Programm in einem Mikrocontroller einer Steuereinheit realisiert ist, umfasst neben den dargestellten modularen Software-Gateways (:CANCAN, :CANSPI) busspezifische Sendeeinheiten, die den Zugriff auf das Busmedium kontrollieren. Jedem Bussegment sind Empfangsobjekte zugeordnet (:Rx-CAN, :Rx-SPI), welche die Entscheidung treffen, in welches modulare Software-Gateway eine ankommende Nachricht geroutet wird. Entsprechend gibt es für den Sendevorgang busspezifische Sendeobjekte (:TxCAN, :TxSPI), die den Zugriff auf den jeweiligen Bus kontrollieren und verhindern, dass mehrere modulare Software-Gateways das Sendemedium gleichzeitig belegen.

Die modularen Software-Gateways (in Figur 2: CANCAN:CANSPI) setzen sich intern aus mehreren Software-Objekten zusammen, die ankommende Nachrichten zwischenpuffern und die protokollspezifischen Anpassungen vornehmen. Eine einfache Anpassung ist z.B., dass eine CAN-Nachricht vom Highspeed-CAN mit der ID 100 auf den Lowspeed-CAN mit der ID 200 gesendet werden muss. Diese protokollspezifischen Anpassungen werden dann durch entsprechende Programme (z.B. im einfachsten Fall durch eine Tabelle) vorgenommen. Für die protokollspezifischen Anpassungen, die innerhalb der modularen Software-Gateways durchgeführt werden, kommen Konfigurationstabellen zum Einsatz.

In einer bevorzugten Ausführung werden die busspezifischen Empfangsobjekte über sogenannte Routingtabellen konfiguriert, mit deren Hilfe entschieden wird, ob eine ankommende Nachricht an kein, an ein oder an beide modulare Software-Gateways weitergegeben wird. In der Routing-Tabelle werden somit für jeden ankommenden Nachrichtentyp die Weiterbehandlung der Nachricht abgelegt. Ferner kann durch unterschiedliche Schnelligkeit der Busse es vorkommen, dass von einem zum anderen Bussegment nur jede 5. Nachricht eines bestimmten Typs (z.B. Motordrehzahl) weitergeleitet wird. Auch dies kann mittels der genannten Routingtabellen im Empfangsobjekt realisiert sein. Diese Routingtabellen sind dabei unabhängig vom Source-Code des eigentlichen Gateways, so dass eine Veränderung der Routingtabellen nicht oder nur unwesentliche Änderungen der Software des betrofffenen modularen Software-Gateways nach sich zieht. Die busspezifische Empfangseinheit sucht die gefundene Nachricht in der Routing-Tabelle auf und entscheidet aufgrund der darin enthaltenen Informationen, welches modulare Software-Gateway die Nachricht zur Weiterverarbeitung erhält.

Die busspezifischen Sendeeinheiten, bzw. die dort vorgesehenen Programme, kontrollieren den Zugriff auf den Bus. Ist der Bus gerade belegt, so stellen sie sicher, dass von keinem modularen Software-Gateway gesendet wird.

Zusätzlich puffern wie oben erwähnt die modularen Software-Gateways die Nachrichten zwischen, um einen Nachrichtenverlust zu verhindern, z.B. dann, wenn das Bussegment auf dem gesendet werden soll, gerade belegt ist. Eine Nachricht wird also vor ihrer direkten Weiterleitung in einer Warteschleife abgelegt. Das Ablegen einer Nachricht in dieser Warteschleife wird beim internen Scheduler der Gateway-Einheit vermerkt. Dieser veranlasst dann das Senden der Nachricht, indem er eine Nachricht an das entsprechende modulare logische Software-Gateway sendet. Dieses veranlasst dann das Versenden der Nachricht. Will also ein modulares Software-Gateway eine Nachricht senden, so muss es diesen Sendewunsch beim Scheduler anmelden. Von der Reihenfolge der Anmeldung ist es abhängig, welches Software-Gateway zuerst die Berechtigung für das Senden einer Nachricht erhält. Dieses Konzept stellt die Einhaltung der Reihenfolge der Nachrichten sicher. Gibt es besondere hochpriorisierte Nachrichten im System, so stellt der Scheduler mehrere Methoden bereit, welche von den modulare Software-Gateways aufgerufen werden können, um einen Sendewunsch anzumelden. Der Scheduler arbeitet dann immer zuerst die hochpriorisierten Anforderungen ab und dann die normalen und erteilt prioritätenabhängig Sendeberechtungen an die modularen Software-Gateways. Beispielsweise ist jede Sendewunsch mit einem die Priorität der Nachricht repräsentierenden Datum versehen oder der Scheduler umfasst eine Tabelle, in der die Prioritäten der Nachrichten vermerkt ist, aus der der Scheduler die Priorität ausliest.

Durch die oben dargestellte Architektur und Vorgehensweise ist man in der Lage, die Gateway-Einheit über Tabellen zu konfigurieren, ohne deren Software selbst abzuändern. Beispielsweise kann über eine Abänderung der Parametersätze im Speicher das Gateway für ein anderes Nachrichten-Routing umprogrammiert werden. Werden die gleichen Schnittstellen verwendet, so lässt sich die Gateway-Software ausschließlich über Parametersätze konfigurieren. Bei dem Anschluss anderer Schnittstellen an das Gateway, ist ein modularer Software-Baustein in das Gateway zu integrieren. Somit werden unterschiedliche Gateway-Konfigurationen durch das Zusammenführen von Software-Modulen beispielsweise aus Bibliotheken und aus dem Bereitstellen der Routing-Information generiert. Die Neuintegration einer CAN-Schnittstelle mit neuer CAN-Matrix beschränkt sich im wesentlichen auf das Eingeben der neuen Routing-Information in die Routing-Tabelle. So können CAN-CAN-Gateways unterschiedlicher Baudraten in kürzester Zeit in ein System eingepasst werden. Die Testbarkeit und Verifizierung des entstehenden Codes werden dadurch vereinfacht, weil der konfigurationsunabhängige Code zentral getestet wird und neben dem Systemtest ausschliesslich ein Integrationstest für das neue logische SW-Gateway bzw. die neue Konfiguration durchgeführt werden muß.

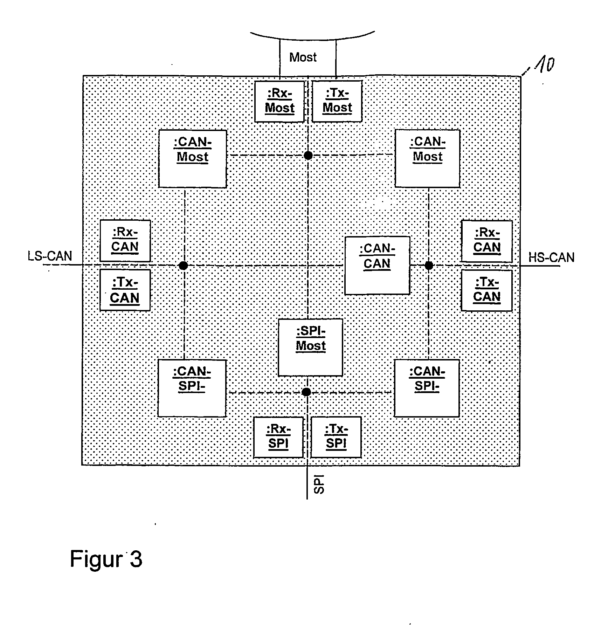

Figur 3 zeigt ein Gateway 10 zur Kopplung 4 unterschiedlicher Bussegmente, einen Lowspeed-CAN, einen Highspeed-CAN, ein SPI-Bus und einen MOST-Bus. Die vorstehend beschriebene Architektur ist auch hier eingesetzt, wobei modulare Software-Gateways (:CAN-MOST, :CAN-SPI, :CAN-CAN, :SPI-MOST) eingesetzt werden, die jeweils einen individuellen Kopplungspfad realisieren. Daneben sind busspezifisch Empfängermodule (:Rx-Most, :Rx-CAN, :Rx-SPI) und Sendemodule (:Tx-Most, :TxCAN, :Tx-SPI) wie vorstehend beschrieben darstellt. Die dargestellte Architektur zeigt eine zentrale Gateway-Einheit, welche die genannten vier Bussegmente miteinander verbindet. Eine andere Netzwerktopologie weist sechs Punkt-zu-Punkt-Gateway-Einheiten. Jedes dieser Punkt-zu-Punkt-Gateways enthält die oben dargestellte modulare Software-Gateway-Struktur mit Sende- und Empfängerelementen zur busspezifischen Anbindung. Es zeigt sich, dass durch die oben dargestellte Architektur die physikalische Netzkoppelarchitektur zwischen den beiden Extremen zentrales Gateway und Punkt-zu-Punkt-Gateway alle denkbaren Mischformen enthalten kann. Die Software-Architektur ist unabhängig von der physikalischen Netzkoppelarchitektur, so dass sie die Kopplung in allen denkbaren Architekturen erlaubt. Unterschiedlich kann sein, dass bei der zentralen Gateway-Variante die Software aufeinem Mikrocontroller, in der dezentralen Variante auf unterschiedlichen Controllern abläuft.

Zur Konfiguration der Gateway-Einheit ergeben sich verschiedene Möglichkeiten. Die Konfiguration der Routing-Entscheidung erfolgt über Routing-Tabellen. In diesem Fall entscheiden die busspezifischen Empfangsobjekte, in weiche modulare Software-Gateways eine Nachricht weiterzuleiten ist. Diese Empfangsobjekte werden deshalb mit Routing-Tabellen konfiguriert, welche angeben, welche Nachrichten in welches Subnetz und ggf. unter welchen Randbedingungen (z.B. jede 5., etc.) weiterzuleiten sind. Die Software der modularen Software-Gateways realisiert dann die busspezifischen Anpassungen und ist von dem eigentlichen Routing-Vorgang unabhängig. Die Konfiguration der Software-Gateways erfolgt dann durch Anpassung von Protokollparametern. In diesem Fall werden die Software-Gateways über Tabellen konfiguriert, die angeben, wie die ProtokollParameter umzusetzen sind. Hier kann konfiguriert werden, dass eine Nachricht mit dem Identifikationscode 100 bei dem Versenden auf dem anderen Netzsegment die Identifikationsnummer 200 tragen muss. Ferner sind, um die Gateway-Software an die unterschiedlichen Netzkoppelarchitekturen anzupassen, die Routing-Tabellen, mit denen die busspezifischen Empfangsobjekte konfiguriert werden, aufzuteilen bzw. zusammenzuführen. Diese Aufgabe wird durch einen internen Scheduler erledigt, welcher die modularen Software-Gateways in einer zentralen Gateway-Einheit untereinander koordiniert. Der Scheduler muss für die verschiedenen Gateway-Varianten individuell generiert werden.

In einer anderen Ausführungsform handelt es sich bei dem Gateway um kein Standalone-Gateway, sondern um ein Gateway, das in ein Steuergerät mit zusätzlichen Anwendungsfunktionen integriert wird. Dort kann die Gateway-Software auch die Funktionalität eines normalen Kommunikationsdecks übernehmen. Das heißt, es muss hier auch möglich sein, Nachrichten zu den eigentlichen Anwendungen weiterzuleiten und Nachrichten zum Versenden von diesen entgegenzunehmen. Hierzu werden weitere Objekte benötigt, welche die Fähigkeit besitzen, die schichtspezifischen Protokollparameter zu entfernen bzw hinzuzufügen, um die Nachricht in die nächsthöhere bzw. nächstniedrigere Schicht weiterzureichen. Diese zusätzlichen Objekte sind in der Regel Bestandteil der Software des normalen Kommunikationsnetz. Beim Schichtenmodell eines Steuergeräts, in welchem ein CAN-CAN-Gateway integriert ist, wird das Anwendungssystem und das Kommunikationssystem unterschieden konkret sind drei Schichten vorgesehen, wobei in einer ersten Schicht ein Treiber für den Lowspeed-CAN und ein Treiber für den Highspeed-CAN vorgesehen sind. Ferner wurden in der dritten Schicht der Vermittlungsschicht, zusätzliche Objekte eingefügt (CAN-Schicht), die über die Empfangs- und Sendeobjekte mit Anwendungen kommunizieren. Diese zusätzlichen Objekte führen, falls erforderlich, eine Zwischenpufferung der Nachrichten durch und fügen protokollspezifische Parameter hinzu oder entfernen diese. Das modulare Software-Gateway, das in diese Schicht integriert ist (CAN-CAN) routet Nachrichten vom einen Bus zum anderen. Die Empfangs- und Sendeobjekte werden entsprechend dem vorstehend Beschriebenen für das Routing von Nachrichten zwischen den beiden CAN-Bussen verwendet. Sie stellen die Schnittstellen zwischen den Schichten dar. In einer weiteren Ausführung ist durch entsprechende Erweiterung es möglich, zwei Subnetze auf unterschiedlichen Schichten zu koppeln. Dies ist beispielsweise dann erforderlich, wenn ein Transport-Protokoll (z.B. ISO TP) zum Einsatz kommt. In diesem Fall existiert dann pro Schicht, in der eine Kopplung stattfindet, ein modulares Software-Gateway. So kann beispielsweise ein CAN-CAN-Gateway in der dritten Schicht vorgesehen sein, welches CAN-Nachrichten (z.B. Geschwindigkeitsinformation oder Tankfüllstand) in der dritten Schicht transportieren, während ein weitere CAN-CAN-Gateway in einer vierten Schicht Transportinformationen koppelt, welche beispielsweise einen Text für die Anzeige im Fahrzeugcomputer enthält. Eine Kopplung in höheren Schichten kann auch erforderlich sein, um den Inhalt einer Nachricht die weitergeleitet werden soll überprüfen zu können. Der Inhalt kann nur dann analysiert werden, wenn die komplette Nachricht empfangen ist.

## Patentansprüche

1. Gateway-Einheit zur Verbindung von Subnetzen, wobei die Gateway-Einheit (10) wenigstens zwei Subnetze (1, 2, 3) miteinander verbindet, wobei die Gateway-Einheit (10) aus wenigstens einem modularen Software-Gateway (12, 13, 23) besteht, welches Nachrichten zwischen genau zwei Subnetzen (1, 2, 3) routet, **dadurch gekennzeichnet, dass** wenigstens drei Subnetze (1, 2, 3) an die Gateway-Einheit (10) angeschlossen sind, wobei modulare Software-Gateways (12, 13, 23) eingesetzt werden, wobei jedes modulare Software-Gateway (12,13, 23) Nachrichten zwischen genau zwei Subnetzen (1, 2, 3) routet.

2. Gateway-Einheit nach Anspruch 1, **dadurch gekennzeichnet, dass** ferner für jedes Subnetz (1, 2, 3) busspezifische Empfangsobjekte vorgesehen sind, welche die ankommenden Nachrichten an ausgewählte modulare Software-Gateways (12, 13, 22) weitergeben.

3. Gateway-Einheit nach Anspruch 2, **dadurch gekennzeichnet, dass** die Empfangsobjekte Routing-Tabellen umfassen, in denen die Behandlung ankommender Nachrichten konfiguriert sind.

4. Gateway-Einheit nach einem der vorhergehenden Ansprüche, **dadurch gekennzeichnet, dass** ferner für jedes Subnetz (1, 2, 3) busspezifische Sendeobjekte vorgesehen sind, welche den Zugriff auf den jeweiligen Bus kontrollieren.

5. Gateway-Einheit nach einem der vorhergehenden Ansprüche, **dadurch gekennzeichnet, dass** das modulare Software-Gateway (12, 13, 23) ankommende Nachrichten zwischenpuffert und protokollspezifische Anpassungen vornimmt.

## Claims

1. Gateway unit for connecting subnetworks, the gateway unit (10) connecting at least two subnetworks (1, 2, 3) to one another, the gateway unit (10) comprising at least one modular software gateway (12, 13, 23) which routes messages between precisely two subnetworks (1, 2, 3), **characterized in that** at least three subnetworks (1, 2, 3) are connected to the gateway unit (10), modular software gateways (12, 13, 23) being used, each modular software gateway (12, 13, 23) routing messages between precisely two subnetworks (1, 2, 3).

2. Gateway unit according to Claim 1, **characterized in that** bus-specific reception objects which forward the incoming messages to selected modular software gateways (12, 13, 23) are also provided for each subnetwork (1, 2, 3).

3. Gateway unit according to Claim 2, **characterized in that** the reception objects comprise routing tables in which the handling of incoming messages is configured.

4. Gateway unit according to one of the preceding claims, **characterized in that** bus-specific transmission objects which control access to the respective bus are also provided for each subnetwork (1, 2, 3).

5. Gateway unit according to one of the preceding claims, **characterized in that** the modular software gateway (12, 13, 23) buffer-stores incoming messages and carries out protocol-specific adaptations.

## Revendications

1. Unité de passerelle pour relier des sous-réseaux, cette unité de passerelle (10) reliant au moins deux sous-réseaux (1, 2, 3), l'une de passerelle (10) se composant d'au moins une passerelle en programme modulaire (12, 13, 23) qui dirige les informations précisément entre deux sous réseaux (1, 2, 3),
**caractérisée en ce que**
au moins trois sous réseaux (1, 2, 3) sont raccordés à l'unité de passerelle (10),
on utilise des passerelles en programme modulaire (12, 13, 23) et chaque passerelle en programme modulaire (12, 13, 23) dirige les messages entre exactement deux sous réseaux (1, 2, 3).

2. Unité de passerelle selon la revendication 1,
**caractérisée en ce que**
en outre pour chaque sous réseaux (1, 2, 3) il y a des objets de réception spécifiques au bus qui dirigent les messages entrant à des passerelles au programme modulaire sélectionnées (12, 13, 29).

3. Unité de passerelle selon la revendication 2,
**caractérisée en ce que**
les objets de réception comprennent des tableaux de routage dans lesquels est configuré le traitement des messages entrant.

4. Unité de passerelle selon l'une des revendications précédentes,
**caractérisée en ce que**
en outre, pour chaque sous réseau (1, 2, 3) on a des objets d'émission spécifiques au bus qui contrôlent l'accès au bus respectif.

5. Unité de passerelle selon l'une des revendications précédentes,
**caractérisée en ce que**
la passerelle en programme modulaire (12, 13, 23) stocke de façon intermédiaire les messages entrant et effectue une adaptation spécifique au protocole.
